# EUROPEAN PATENT SPECIFICATION

(11) **EP 0 645 872 B1**
(45) Date of publication and mention of the grant of the patent: **29.07.1998**
(21) Application number: 94307073.0
(22) Date of filing: 28.09.1994
(51) Int. Cl.: H02K 11/02, H02K 23/66

(54) **Miniature motor**
Kleinmotor
Moteur miniature

(30) Priority: 29.09.1993 JP 242659/93
(43) Date of publication of application: 29.03.1995
(73) Proprietor: MABUCHI MOTOR KABUSHIKI KAISHA, Matsudo-shi, Chiba-ken (JP)
(72) Inventor: Ohtake, Takahiro, c/o Mabuchi Motor K. K., Inba-gun, Chiba-ken (JP); Yuhi, Toshiya, c/o Mabuchi Motor K. K., Inba-gun, Chiba-ken (JP); Kato, Masahiko, c/o Mabuchi Motor K. K., Inba-gun, Chiba-ken (JP)
(74) Representative: Hitchcock, Esmond Antony

(56) References cited:
- EP-A- 0 509 683
- EP-A- 0 511 876
- DE-A- 3 731 409
- FR-A- 2 454 202
- GB-A- 2 222 730

## Description

This invention relates to a miniature motor of the type commonly used, for example, in audio equipment, precision instruments, and automotive electrical equipment.

In known miniature motors, electrical noise is commonly prevented by connecting a capacitor across the input terminals. The capacitor is usually provided on an outer end of the motor case cap. However, additional space is then required within the system or equipment in which the miniature motor is incorporated, to prevent interference with other components. Furthermore, if a choke coil, for example, is used as an electrical noise prevention element together with the capacitor, then this problem could be further aggravated.

Alternatively, the electrical noise prevention element may be provided on the inner end face of the motor case cap. A pair of brushes may also be provided on the inner end face of the case cap. Such prior art is disclosed in EP 0509683 A2. In this prior art a miniature electric motor comprises a metallic case formed into a bottomed hollow cylindrical shape, and on the inner circumferential surface of which a permanent magnet is fitted. A rotor with an armature and a commutator is supported in a bearing in the case and a bearing in a case cover fitted to the open end of the case. Brushes in the cover make sliding contact with the commutator and input terminals are electrically connected to the brushes. One or more electronic components are connected to the input terminals and held in place by a spring member made of an electrically conductive material. It is difficult and complicated to install lead wires for each noise prevention element and wires for feeding power to the brushes. Furthermore, the lead wires and the wires connecting to the brushes may be entangled and shortcircuited.

The present invention is directed at a miniature motor construction that incorporates fewer different components, whilst facilitating simple assembly at relatively low cost. A motor of the type to which the invention relates has a metallic tubular case closed at one end with a permanent magnet fitted to the inner surface thereof; a case cap closing the open end of the case; a rotor comprising an armature and a commutator, being rotatably supported by bearings provided on the closed end of the case and on the case cap; a pair of brush holders supporting brushes for making sliding contact with the commutator; and a pair of input terminals electrically connected to the brushes. According to the invention, a pair of electrically conductive connecting members is provided on the inner end face of the case cap, each member being electrically insulated from the brush holders with one end connected to an input terminal and another end connected to a brush, provision being made for the selective connection of noise prevention elements between the connecting members and between the connecting members and the brushes.

In a preferred embodiment a capacitor is connected between the connecting members.

It is further preferred that pig-tail wires provide electrical connections between said other ends of the connecting members and the brushes and that each brush holder may have a pair of terminals with a pig-tail wire connecting one said terminal with a respective brush, the other end of each connecting member being electrically connected to a respective said terminal. The latter connection can include choke coils.

In some preferred embodiments of the invention the axially projected shape of each connecting member may extend substantially around that of the respective brush holder. In an alternative arrangement the projection of a part of each connecting member onto the plane of the case cap intersects obliquely with a profile section of the juxtaposed face of the case cap. U-shaped or V-shaped connecting members can be used.

To minimise the number of different components required in a motor in accordance with the invention, broadly they may be provided in identical pairs. Thus, the axially projected shape of the brush holders and of the connecting members, can be made symmetrical with respect to the motor axis.

A known motor construction and some embodiments of the invention will now be described by way of example and with reference to the accompanying drawings wherein:
Figure 1 is a longitudinal partly sectional view of a conventional miniature motor;
Figure 2 is an inner end view of a case cap according to one embodiment of the invention;
Figure 3 is a partly cross-sectional view along line A-A of Figure 2;
Figure 4 is an outer end view of a case cap of the embodiment shown in Figures 2 and 3;
Figures 5A and 5B are enlarged plan and end views, respectively, of the brush holder 15 shown in Figures 2 to 4;
Figures 6A to 6C are enlarged plan, front and side views respectively, of the connecting member 16 shown in Figures 2 to 4;
Figures 7A and 7B are enlarged plan and side views respectively, of the input terminal 8 shown in Figures 2 to 4;
Figures 8 to 10 are inner end views of a case cap according to second, third and fourth embodiments of the invention, respectively.

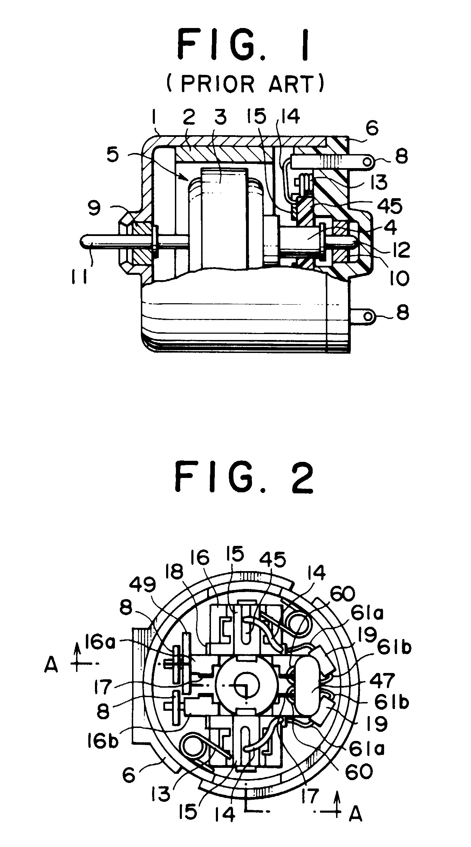

The motor shown in Figure 1 has a tubular case 1 made of a metallic material, such as mild steel, with a permanent magnet 2 formed into an arc-segment shape, for example, fixedly fitted to the inner circumferential surface thereof. A rotor is mounted in the case and comprises a commutator 4 and an armature iron core 3 facing the permanent magnet 2. A case cap 6 made of an insulating material, such as a resin material, is fitted to an open end of the case 1. Brushes 45 of rectangular cross-section for example, are slidably fitted in brush holders 15 provided on the inner end face of the case cap 6 in such a manner as to make sliding contact with the commutator 4.

A spring 13 is provided for forcing the brush 45 onto the commutator 4. Input terminals 8 pass through the case cap and are fixedly fitted thereto. Each is electrically connected to a brush 45 via a pig-tail wire 14. Bearings 9 and 10 are fixedly fitted to the bottom of the case 1 and the central part of the case cap 6, respectively, to rotatably support shafts 11 and 12 of the rotor 5. As electric current is fed to the input terminals 8 the motor operates in a known manner to drive external equipment (not shown) via the shaft 11.

In this type of miniature motor, electrical noise is commonly prevented by connecting a capacitor (not shown) across the input terminals 8. It is usually provided on the outer end face of the case cap 6, with its lead wires connected directly to the terminals or via other electrically conductive members by soldering, for example.

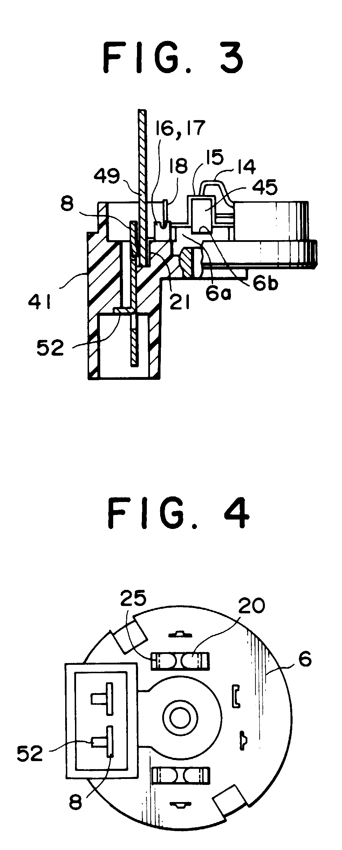

In the embodiment of the invention shown in Figures 2 to 4, a brush holder 15 is made of an electrically conductive material, and substantially W-shaped in side view as shown in Figure 3. It is disposed on a mounting part 6a which protrudes from the inner end face of a case cap 6, and is fixedly fitted thereto via a fixing piece 20. A brush 45 is held in the brush holder 15 in such a manner that the brush 45 can slide in a groove 6b provided on the mounting part 6a.

A connecting member 16 is made of an electrically conductive material, and is substantially U-shaped. It is fixedly fitted to the inner end face of the case cap 6 via a fixing piece 21 in such a manner as to be insulated from the brush holder 15, as described below. Pairs of terminals 18 and 17 are provided integrally with the brush holder 15 and the connecting member 16, respectively, and protrude from the inner end face of the case cap 6.

The input terminal 8, having a stopper (not shown) and a lanced and raised lug 52, passes through the case cap 6 and is fixedly fitted thereto, as described below. One input terminal 8 is connected to an open end 16a of one connecting member 16 via a positive temperature coefficient resistor 49, and the other input terminal is connected directly to an open end 16b of the other connecting member 16.

A capacitor 47 is connected across the terminals 17 and 17 on the other open end side of the connecting members 16 via lead wires 60. One lead wire 61b from each choke coil 19 is connected to a respective terminal 17, whilst the other lead wire 61a is connected to the terminal 18 of a respective brush holder 15. The pig-tail wire 14 of each brush 45 is also connected to a respective terminal 18.

With the aforementioned construction, power may be fed from the input terminals 8 to the connecting members 16 directly or via a positive temperature coefficient resistor 49, and to the pair of brushes 45 via the choke coils 19, and the capacitor 47 may be connected in parallel across the brushes 45. Thus, overheating of the miniature motor may be avoided, and electrical noise may be prevented.

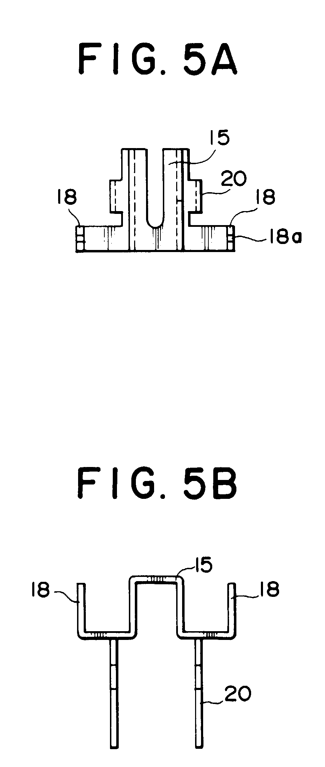

The brush holder 15 is substantially T shaped in the plan view shown in Figure 5A, and substantially W shaped in the end view of Figure 5B. Fixing pieces 20 are integrally formed with the brush holder and, in the view shown in Figure 5B, extend downwardly therefrom. The brush holders 15 are fixedly fitted to the case cap 6 by passing the fixing pieces 20 through mounting holes 25 provided on the case cap 6 and bending the tips of the fixing pieces 20, as shown in Figure 4. A notch 18a is preferably provided at the end of the terminal 18.

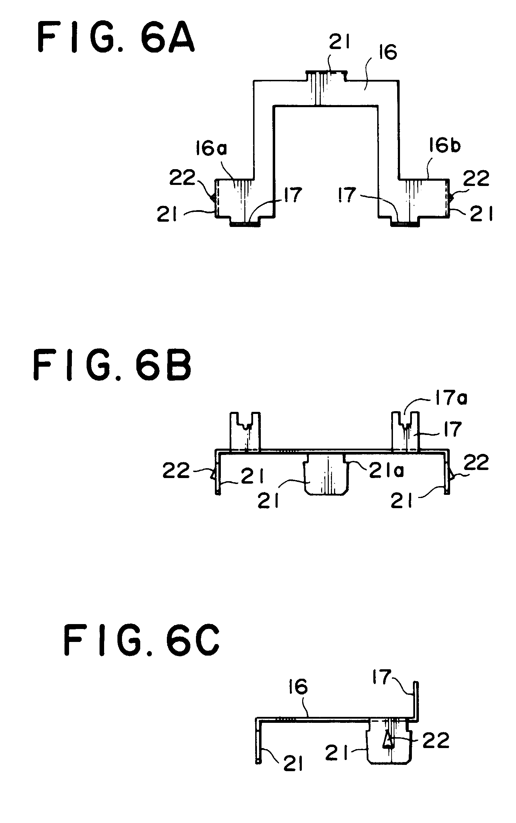

The substantially U-shaped connecting member 16 shown in Figures 6A to 6C has open ends 16a and 16b which extend outwards. The open end 16a is slightly shorter than the open end 16b in order to accommodate the positive temperature coefficient resistor 49, if necessary, as shown in Figures 2 and 3.

A pair of terminals 17 is provided integrally on the side edges of the open ends 16a and 16b. Each terminal 17 is bent upwards, out of the plane of the connecting member 16, and has a notch 17a provided on the end as shown in Figure 6B. Fixing pieces 21 are integrally provided on a central portion of the U shape and at the ends of the open ends 16a and 16b of the connecting member 16, and are bent downwards as shown in Figure 6B. A portion 21a of each fixing piece is slightly wider than the corresponding mounting holes provided on the case cap 6. Protrusions 22 are formed on the outer surfaces of the fixing pieces 21 which are provided on the open ends 16a and 16b.

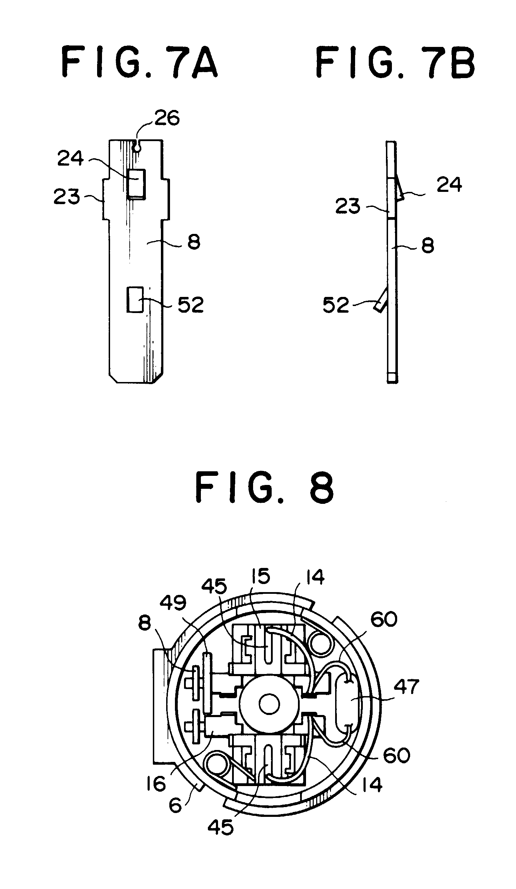

As shown in Figures 7A and 7B, a stopper 23 is provided towards one end of the input terminal 8, for fixedly fitting the terminal to the case cap 6. The stopper 23 is wider than the middle portion of the input terminal 8. During assembly, the input terminal 8 is inserted into the case cap 6, and fixedly fitted in position by bending the lanced and raised lug 52 until it is substantially perpendicular to the surface of the terminal. A lanced and raised piece 24 is provided towards the same end of the input terminal 8 as the stopper 23.

Electrical connection between the input terminal 8, the connecting member 16 and the brush holder 15, all formed in the aforementioned manner, can be maintained by installing these members on the case cap 6. The input terminal 8 and the connecting member 16 are brought into positive electrical contact as the lanced and raised lug 24 of the input terminal makes contact with the projection 22 of the fixing piece 21. If a positive temperature coefficient resistor 49 is installed between the input terminal 8 and the connecting member 16, the electrical connection is maintained. The lanced and raised lug 24 and the projection 22 of the fixing piece 21 make contact with the surface of the positive temperature coefficient resistor 49. If an external force acts on the positive temperature coefficient resistor 49 in Figure 3, pulling it away from the case cap 6, the lanced and raised lug 24 of the input terminal 8 acts as if cutting into the surface of the positive temperature coefficient resistor 49, increasing the retaining force and thus preventing the positive temperature coefficient resistor 49 from coming off.

In the second embodiment of the invention shown in Figure 8, one terminal 17 of each connecting member 16 is connected to a respective lead wire 60 of the capacitor 47 and a pig-tail wire 14 of a respective brush 45. In this manner, electrical noise may be prevented by connecting a capacitor 47 across the brushes 45 and 45.

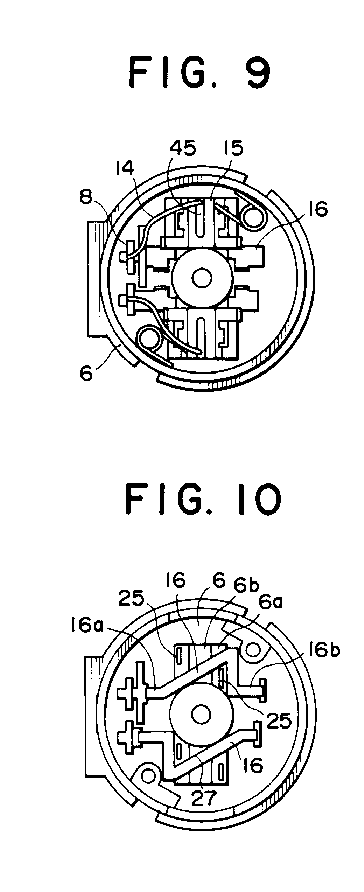

Figure 9 shows a third embodiment of the invention in which the positive temperature coefficient resistor 49, the capacitor 47 and the choke coils 19 as shown in Figure 2 are not used, and the pig-tail wire 14 of the brush 45 is connected directly to the input terminal 8. In this embodiment, it is preferable to provide a notch 26 on the end of the input terminal 8, as shown in Figure 7A.

Figure 10 illustrates a fourth embodiment of the invention, with all component members, except for the connecting member 16, omitted. The connecting member 16 is substantially V-shaped and fitted to the inner end face of the case cap 6 in a groove 27 obliquely traversing the mounting part 6a of a brush holder (not shown). The open ends 16a and 16b of the connecting member 16 are essentially the same as those shown in Figures 6A and 6B. Mounting holes 25 are provided for receiving the fixing pieces of the brush holders. In this embodiment, the fixing pieces 20 of the brush holder 15 shown in Figures 5A and 5B are provided on a line which intersects obliquely with a groove 6b when the brush holder 15 is installed on the case cap 6.

According to the invention, the positive temperature coefficient resistor, the capacitor, the choke coil, etc. may be selectively installed on the inner end of the case cap. The embodiment shown in Figure 10 may be used in motors having little space at the end of the brush holder away from the motor axis.

The groove 27 has no adverse effect on the functioning of the brushes. If the groove 27 were provided at right angles to the groove 6b in which the brush slides, the edge of the groove 27 may interfere with the end of the brush, adversely affecting the sliding contact of the brushes with the commutator. In this embodiment, however, the brush can smoothly ride over the groove 27 as it is provided obliquely with respect to the groove 6b.

This invention as described above may provide the following benefits:
(1) The brush holder and the connecting member are each integrally formed and are configured to provide a greater amount of space in the region of the inner end face of the case cap;
(2) An electrical noise prevention element may be housed on the inner end face of the case cap, thereby preventing interference between the electrical noise prevention element and the components of the equipment in which the motor is installed;
(3) The shapes of the component members, when projected onto the plane of the end face of the case cap, are symmetrical with respect to the motor axis. Therefore, the number of different component members required may be reduced, and consequently parts management is simplified and manufacturing costs may be decreased.
(4) Workability can be improved because the electrical noise prevention element can be installed at a close location.

## Claims

1. A miniature motor having a metallic tubular case (1) closed at one end with a permanent magnet (2) fitted to the inner surface thereof; a case cap (6) closing the open end of the case; a rotor comprising an armature (3) and a commutator (4), being rotatably supported by bearings (9, 10) provided on the closed end of the case and on the case cap; a pair of brush holders (15) supporting brushes (45) for making sliding contact with the commutator (4); and a pair of input terminals (8) electrically connected to the brushes (15)
CHARACTERISED IN THAT
a pair of electrically conductive connecting members (16) is provided on the inner end face of the case cap (6), each member being electrically insulated from the brush holders (15) with one end connected to an input terminal (8) and another end connected to a brush (45), provision being made for the selective connection of noise prevention elements (19, 47) between the connecting members (16) and between the connecting members (16) and the brushes (45).

2. A miniature motor as claimed in Claim 1 wherein the projection onto the plane of the case cap (6) of each connecting member (16) is substantially U-shaped, and extends substantially around that of a respective brush holder (15).

3. A miniature motor as claimed in Claim 2 wherein a capacitor (47) is connected between the connecting members (16).

4. A miniature motor according to Claim 3 wherein pig-tail wires (14) provide electrical connections between said other ends of the connecting members (16) and the brushes (45).

5. A miniature motor according to Claim 4 wherein each brush holder (15) has a pair of terminals (18) with a pig-tail wire connecting one said terminal (18) with a respective brush (45), the other end of each connecting member (16) being electrically connected to a respective said terminal (18).

6. A miniature motor according to Claim 5 wherein the connections between the brush holder terminals (18) and the respective connecting member ends include choke coils (19).

7. A miniature motor as claimed in Claim 1 wherein each brush holder (15) having a pair of terminals (18) with a pig-tail wire connecting one said terminal (18) with a respective brush (45), the other end of each connecting member (16) being electrically connected to a respective said terminal (18) by a connection including a choke coil; and the projection of a part of each connecting member (16) onto the plane of the case cap (6) intersecting obliquely with a profile section of the juxtaposed face of the case cap (6).

8. A miniature motor according to Claim 7 wherein said profile section is one of a pair of grooves (6b) provided on the inner end face of the case cap (6) for supporting the brushes (45).

9. A miniature motor as claimed in Claim 8 wherein the connecting members (16) are substantially V-shaped.

10. A miniature motor as claimed in any preceding Claim wherein the shape of the pair of brush holders (15) and the pair of connecting members (16) respectively, when projected onto the plane of the case cap (6), is symmetrical with respect to the motor axis.

11. A miniature motor as claimed in any preceding Claim wherein a positive temperature coefficient resistor (49) is connected between said one end of a connecting member (16) and an input terminal (8).

## Patentansprüche

1. Kleinmotor enthaltend ein metallisches rohrförmiges Gehäuse (1), das an einem Ende geschlossen ist und an seiner inneren Oberfläche mit einem eingepaßten Dauermagneten (2) versehen ist; eine Gehäusekappe (6), die das offene Ende des Gehäuses abschließt; einen Rotor, der einen Anker (3) und einen Kommutator (4) hat und drehbar in Lagern (9, 10) gehaltert ist, die am geschlossenen Ende des Gehäuses und an der Gehäusekappe vorgesehen sind; ein Paar Bürstenhalter (15), die Bürsten (45) zum Herstellen von Gleitkontakt mit dem Kommutator (4) tragen; und ein Paar Eingangsanschlüsse (8), die mit den Bürsten (45) elektrisch verbunden sind,
**dadurch gekennzeichnet,** daß
an der inneren Stirnfläche der Gehäusekappe (6) ein Paar elektrisch leitender Verbindungsglieder (16) vorgesehen ist, von denen jedes Glied von den Bürstenhaltern (15) elektrisch isoliert ist und mit einem Ende mit dem Eingangsanschluß (8) und dem anderen Ende mit einer Bürste (45) verbunden ist, wobei das wahlweise Anschließen von Rauschunterdrückungselementen (19, 47) zwischen den Verbindungsgliedern (16) sowie zwischen den Verbindungsgliedern (16) und den Bürsten (45) vorgesehen ist.

2. Kleinmotor nach Anspruch 1, bei dem die Projektion jedes Verbindungsglieds (16) auf die Ebene der Gehäusekappe (6) im wesentlichen eine U-förmige Gestalt hat und sich im wesentlichen rund um diejenige eines jeweiligen Bürstenhalters (15) erstreckt.

3. Kleinmotor nach Anspruch 2, bei dem ein Kondensator (47) zwischen die Verbindungsglieder (16) geschaltet ist.

4. Kleinmotor nach Anspruch 3, bei dem Litzen oder bewegliche Drähte (14) elektrische Verbindungen zwischen den anderen Enden der Verbindungsglieder (16) und den Bürsten (45) vorsehen.

5. Kleinmotor nach Anspruch 4, bei dem jeder Bürstenhalter (15) ein Paar Anschlüsse (18) hat, wobei eine Litze oder ein beweglicher Draht einen der Anschlüsse (18) mit einer jeweiligen Bürste (45) verbindet und das andere Ende jedes Verbindungsglieds (16) mit einem jeweiligen der Anschlüsse (18) elektrisch verbunden ist.

6. Kleinmotor nach Anspruch 5, bei dem die Verbindungen zwischen den Bürstenhalteranschlüssen (18) und den jeweiligen Verbindungsgliederenden Drosselspulen (19) enthalten.

7. Kleinmotor nach Anspruch 1, bei dem jeder Bürstenhalter (15) ein Paar Anschlüsse (18) hat, wobei eine Litze oder ein beweglicher Draht einen der Anschlüsse (18) mit einer jeweiligen Bürste (45) verbindet und das andere Ende jedes Verbindungsglieds (16) mit einem jeweiligen der Anschlüsse (18) über eine Verbindung elektrisch verbunden ist, die eine Drosselspule enthält; und die Projektion eines Teils jedes Verbindungsglieds (16) auf die Ebene der Gehäusekappe (6) einen Profilabschnitt der daneben gelegenen Fläche der Gehäusekappe (6) schräg überschneidet.

8. Kleinmotor nach Anspruch 7, bei dem der Profilabschnitt eine eines Paares Nuten (6b) bildet, die auf der inneren Stirnfläche der Gehäusekappe (6) zum Abstützen der Bürsten (45) vorgesehen ist.

9. Kleinmotor nach Anspruch 8, bei dem die Verbindungsglieder (16) im wesentlichen V-förmig sind.

10. Kleinmotor nach irgendeinem der vorangegangenen Ansprüche, bei dem die Gestalt des Paares Bürstenhalter (15) und diejenige des Paares Verbindungsglieder (16) bei Projektion auf die Ebene der Gehäusekappe (6) in bezug auf die Motorachse symmetrisch ist.

11. Kleinmotor nach irgendeinem der vorangegangenen Ansprüche, bei dem ein Widerstand (49) mit einem positiven Temperaturkoeffizienten zwischen das eine Ende eines Verbindungsglieds (16) und einen Eingangsanschluß (8) geschaltet ist.

## Revendications

1. Moteur miniature ayant un carter métallique tubulaire (1) fermé à une extrémité, un aimant permanent (2) étant monté sur la surface intérieure de celui-ci, un embout (6) de carter fermant l'extrémité ouverte du carter, un rotor comportant un induit (3) et un collecteur (4), le rotor étant supporté de façon à pouvoir tourner par des paliers (9, 10) disposés à l'extrémité fermée du carter et sur l'embout du carter, une paire de porte-balais (15) supportant des balais (45) servant à établir un contact glissant avec le collecteur (4), et une paire de portes (8) d'entrée connectées électriquement aux balais (45),
CARACTERISE EN CE QUE
une paire d'éléments de connexion électriquement conducteurs (16) est disposée sur la face d'extrémité intérieure de l'embout (6) du carter, chaque élément étant isolé électriquement des porte-balais (15) avec une extrémité connectée à une borne (8) d'entrée et une autre extrémité connectée à un balai (45), un moyen étant prévu pour la connexion sélective d'éléments (19, 47) de prévention de bruit entre les éléments de connexion (16) et entre les éléments de connexion (16) et les balais (45).

2. Moteur miniature selon la revendication 1, dans lequel la projection de chaque élément de connexion (16) sur le plan de l'embout (6) du carter est sensiblement en forme de U et s'étend sensiblement autour de celle d'un porte-balai correspondant (15).

3. Moteur miniature selon la revendication 2, dans lequel un condensateur (47) est monté entre les éléments de connexion (16).

4. Moteur miniature selon la revendication 3, dans lequel des queues de cochons (14) assurent des connexions électriques entre lesdites autres extrémités des éléments de connexion (16) et les balais (45).

5. Moteur miniature selon la revendication 4, dans lequel chaque porte-balai (15) a une paire de bornes (18) avec une queue de cochon connectant une dite borne (18) à un balai correspondant (45), l'autre extrémité de chaque élément de connexion (16) étant électriquement connectée à une dite borne correspondante (18).

6. Moteur miniature selon la revendication 5, dans lequel les connexions entre les bornes (18) des porte-balais et les extrémités des éléments de connexion respectifs comptent des bobines d'arrêt (19).

7. Moteur miniature selon la revendication 1, dans lequel chaque porte-balai (15) a une paire de bornes (18) avec une queue de cochon connectant une dite borne (18) à un balai correspondant (45), l'autre extrémité de chaque élément de connexion (16) étant connectée électriquement à une dite borne correspondante (18) par une connexion comportant une bobine d'arrêt, et la projection d'une partie de chaque élément de connexion (16) sur le plan de l'embout (6) du carter coupant de manière oblique une partie profilée de la face juxtaposée de l'embout (6) du carter.

8. Moteur miniature selon la revendication 7, dans lequel ladite partie profilée est une gorge appartenant à une paire de gorges (6b) réalisées sur la face d'extrémité intérieure de l'embout ((6) du carter pour supporter les balais (45).

9. Moteur miniature selon la revendication 8, dans lequel les éléments de connexion (16) sont sensiblement en forme de V.

10. Moteur miniature selon l'une quelconque des revendications précédentes, dans lequel la forme respective de la paire de porte-balais (15) et de la paire d'éléments de connexion (16), projetée sur le plan de l'embout (16) du carter, est symétrique par rapport à l'axe du moteur.

11. Moteur miniature selon l'une quelconque des revendications précédentes, dans lequel une résistance (19) à coefficient de température positif est montée entre ladite première extrémité d'un élément de connexion (16) et une borne (8) d'entrée.
